# EUROPEAN PATENT SPECIFICATION

(11) **EP 2 805 877 B1**
(45) Date of publication and mention of the grant of the patent: **07.03.2018**
(21) Application number: 13738429.3
(22) Date of filing: 15.01.2013
(51) Int. Cl.: B62D 25/20, B60K 1/04, B62D 29/04

(54) **UNDERCOVER**
UNTERHAUBE
SOUS-NAPPE

(30) Priority: 17.01.2012 JP 2012007256
(43) Date of publication of application: 26.11.2014
(73) Proprietor: Mitsubishi Jidosha Kogyo Kabushiki Kaisha, Tokyo 108-8410 (JP)
(72) Inventor: MIYANAGA, Satoshi, Tokyo 108-8410 (JP); TAKEHARA, Makoto, Tokyo 108-8410 (JP); OCHI, Masaki, Tokyo 108-8410 (JP); ASAI, Ko, Okazaki-shi Aichi 444-8501 (JP); YAMAMOTO, Takanori, Okazaki-shi Aichi 444-8501 (JP)
(74) Representative: Vossius & Partner Patentanwälte Rechtsanwälte mbB
(86) International application number: PCT/JP2013/050561
(87) International publication number: WO 2013/108747

(56) References cited:
- WO-A1-2009/001483
- JP-A- H08 186 390
- JP-A- 2004 027 098
- JP-A- 2005 264 097
- JP-A- 2008 269 954
- JP-A- 2011 143 763

## Description

### Technical Field

The present invention relates to an undercover for a vehicle, which is provided at a vehicle comprising a battery unit and an electric motor for driving.

### Background Art

It is known that in a vehicle provided with an electric motor employing a battery as its power supply, an electromagnetic wave is generated from, e.g., the electric motor, the battery or a current control circuit. There is apprehension that an electromagnetic wave generated at a vehicle affects various kinds of electric components. Thus, it is hoped that an electromagnetic shield measure is taken for electric components which may be affected by an electromagnetic wave or electric components which generate an electromagnetic wave.

For example, as an electromagnetic shield measure for a battery case, it is proposed that a surface of the battery case is coated with an electromagnetic shield paint which functions to reflect an electromagnetic wave, as described in JP H08 186390 A. Also, as another electromagnetic shield measure for a battery case, it is proposed that a wire net is embedded in a resin layer, as described in JP 2001-294048 A.

### Technical Problem

In the case where an electromagnetic shield paint is applied onto a surface, etc. of a battery case as in JP H08 186390 A, it is expensive and thus disadvantageous. In addition, it is also necessary to carry out steps of applying the paint and of drying the paint. Therefore, it takes long time to take an electromagnetic shield measure, and in addition it is very expensive.

In the case where a wire net is embedded in a battery case as in JP 2001-294048, an electronic component provided outside the battery case cannot be shielded against an electromagnetic wave applied from an area located outside the battery case. Furthermore, there is a case where the shape of the battery case varies in accordance with specifications of a battery module provided in the battery case. Therefore, the electromagnetic shield measure to be taken varies from one kind of battery case to another, and thus lacks versatility. In addition, in the case where the wire net is provided in the battery case, it causes electrical shortings in a narrow space of the inside of the battery case.

JP 2004-027098 A discloses a polypropylene resin composition which is said to exhibit excellent electromagnetic shielding properties, strength and appearance. JP 2008-269954 A relates to a battery case for shielding an electromagnetic wave, especially to shield a magnetic field in a low-frequency band. The battery case is coated with a metallic layer and comprises a conductive mesh having an aperture ratio of 10 to 60%, and a resin body consisting of an alloy of polypropylene and polyphenylene ether or an alloy of polyamide or polyphenylene ether. The metallic layer is formed of an Ni layer and a Cu layer.

Therefore, the object of the present invention is to provide an undercover which can effectively function as electromagnetic shield means also.

### Solution to Problem

The undercover of the present invention is defined by the features of claim 1. Preferred embodiments are recited in the dependent claims.
The present invention relates to an undercover provided under a battery unit attached to a lower portion of a vehicle, wherein a conductive fabric into which conducive fibers are weaved is stacked on an undercover body formed of resin and located opposite to a bottom surface of the battery unit, and the undercover body is melted and stuck to the conductive fabric.

In an embodiment of the present invention, the undercover body includes a convex edge located at its peripheral edge to project upwards, and the conductive fabric is provided over an area surrounded by the convex edge. In the embodiment, the convex edge includes: a front edge portion located closer to a front side of the vehicle than a front surface of the battery unit; a rear edge portion located closer to a rear side of the vehicle than a rear surface of the battery unit; and both side edge portions located closer to outer peripheral sides of the vehicle than both side surfaces of the battery unit, and an edge portion of the conductive fabric may be provided over the front edge portion, the rear edge portion and the both side edge portions.

In another embodiment of the present invention, metallic bolts are provided to penetrate the undercover and the conductive fabric in a thickness direction, and are also fixed to metallic frame members of the vehicle. In this structure, the conductive fabric is grounded by the bolts on a vehicle side.

Furthermore, on an upper surface of the conductive fabric, a laminate resin layer may be stacked. In this embodiment, the laminate resin layer and the undercover body may be formed of resin (e.g., polypropylene) having compatibility with each other, and be fused together, with the conductive fabric interposed between the resin of the laminate resin layer and that of the undercover body.

### Advantageous Effects of Invention

According to the present invention, it is possible to take an electromagnetic shield measure for the battery unit, etc., using the undercover, which is provided on a lower portion of the vehicle. Also, with the undercover, it is possible to prevent an electromagnetic wave generated from the battery unit from affecting peripheral components such as an electronic component.

### Brief Description of Drawings

FIG. 1 is a perspective view of a vehicle provided with an undercover according to a first embodiment of the present invention;
FIG. 2 is a perspective view of the undercover and a frame body of the vehicle as shown in FIG. 1, as viewed from below;
FIG. 3 is a cross-sectional view of part of the vehicle as shown in FIG. 1, which is taken along a longitudinal direction of a car body of the vehicle;
FIG. 4 is a perspective view of an anterior half of the undercover;
FIG. 5 is a cross-sectional view schematically showing part of the undercover as shown in FIG. 4;
FIG. 6 is a perspective view enlargedly showing part of a conductive thread;
FIG. 7 is a perspective view enlargedly showing a conductive thread applied to an undercover according to a second embodiment of the present invention; and
FIG. 8 is a cross-sectional view of part of an undercover according to the present invention.

### Brief Description of Embodiments

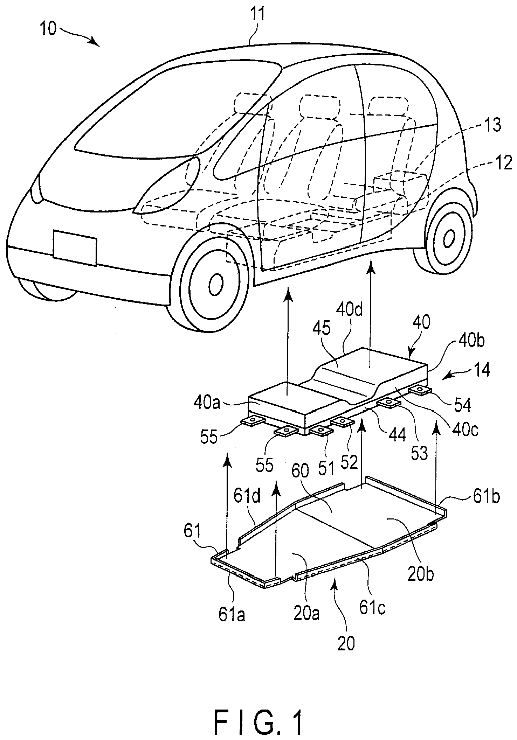

A first embodiment of the present invention will be hereinafter described with reference to FIGS. 1-6.

FIG. 1 shows a vehicle 10 comprising an electric motor for driving. The vehicle 10 comprises an electric motor 12 for driving, a charging device 13, a battery unit 14 and an undercover 20 which will be described later, the electric motor 12 and the charging device 13 being provided at a rear portion of a car body 11, the battery unit 14 being provided at a lower portion of the vehicle 10. Although an electric car is applied as an example of the vehicle 10, a hybrid car comprising an electric motor and an internal combustion engine may be applied as the vehicle 10. The battery unit 14 is provided under a floor of the car body 11.

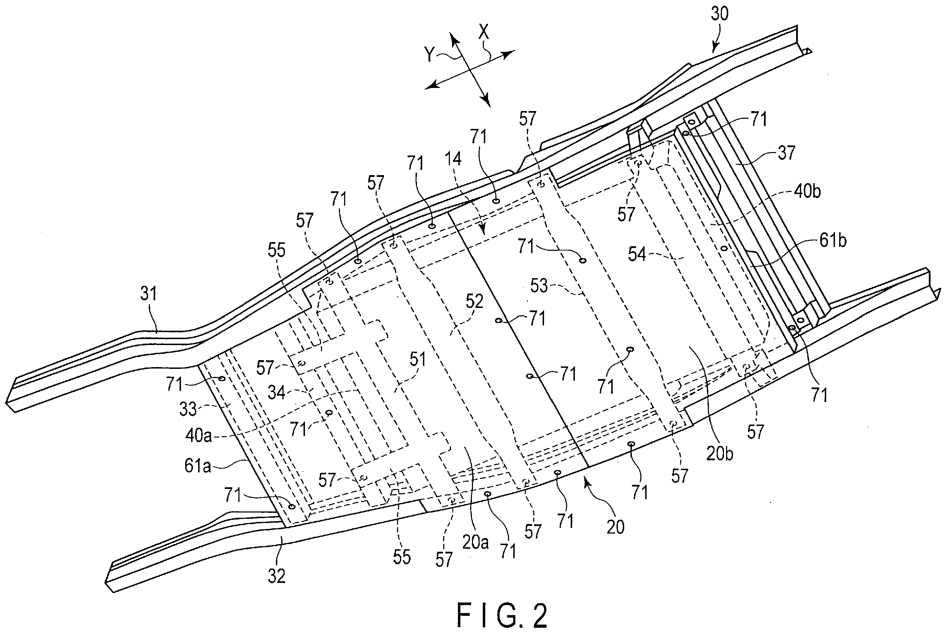

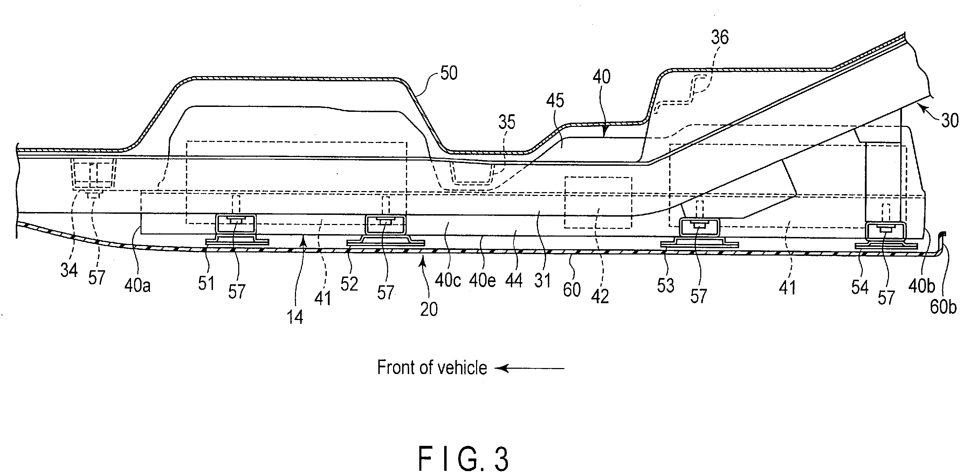

FIG. 2 shows a frame body 30 forming a framework of a lower portion of the car body 11, the battery unit 14 attached to the frame body 30, the undercover 20, etc. In FIG. 2, an arrow X indicates a longitudinal direction of the car body 11, and an arrow Y indicates a width direction of the car body 11. FIG. 3 shows a cross section of part of the vehicle 10 which is taken along the longitudinal direction.

The frame body 30 includes a pair of left and right side members 31 and 32 extending in the longitudinal direction of the car body 11, and cross members 33, 34, 35, 36 and 37 extending in the width direction of the car body 11. The cross members 33-37 are fixed to predetermined portions of the side members 31 and 32 by welding. The side members 31 and 32 and the cross members 33-37 are all formed of metal (e.g., steel), and also serve as electromagnetic shield members for shutting out an electromagnetic wave generated from a periphery of the battery unit 14.

The battery unit 14 includes a battery case 40, and a battery module 41 and an electronic circuit portion 42, which are provided in the battery case 40 (as shown by broken lines in FIG. 3). An example of the battery module 41 is a battery module in which a plurality of cells formed of lithium-ion batteries are connected in series to each other. The electronic circuit portion 42 includes a monitor which detects a state of the battery module 41 and an electronic component which exerts, e.g., control over the battery module 41; and it is electrically connected with the battery module 41.

The battery case 40 comprises a tray member 44 located on a lower side, and a cover member 45 stacked on an upper side of the tray member 44; and has a waterproof structure formed in the shape of a box. The tray member 44 and the cover member 45 are made as a single molded object formed of resin reinforced by, e.g., fiber. An insert member (not shown) is embedded in resin forming the tray member 44. The insert member is formed of metal, and can also function as an electromagnetic shield member.

As shown in FIG. 3, there is provided a floor panel 50 forming a floor portion of the car body 11. The floor panel 50 is formed of metal such as steel, which effects electromagnetic shielding. On a lower side surface of the floor panel 50, the battery unit 14 is provided. Thus, an upper side of the electronic circuit portion 42 of the battery unit 14 is shielded by the floor panel 50 against magnetism. The floor panel 50 also functions as a shield which prevents an electromagnetic wave generated from the battery unit 14 from propagating upwards.

As shown in FIGS. 2 and 3, a plurality of (e.g., four) beam members 51, 52, 53 and 54 are provided at a lower surface side of the battery case 40. The beam members 51, 52, 53 and 54 extend in the width direction of the car body 11. At a front end portion of the battery unit 14, a pair of front-side support members 55 are provided.

The beam members 51, 52, 53 and 54 have a strength sufficient to support a load of the battery unit 14, and are formed of metal material (e.g., steel plate) which effects electromagnetic shielding. The beam members 51, 52, 53 and 54 are fixed to the side members 31 and 32 of the car body 11 by bolts 57. The front-side support members 55 are fixed to the cross member 34 by bolts 57.

In such a manner, the battery unit 14 is supported by the frame body 30 from a lower side of the car body 11, with the beam members 51, 52, 53 and 54 and the front-side support members 55. The beam members 51, 52, 53 and 54 can also function as electromagnetic shield portions for a lower side of the battery unit 14, since they are located on a lower side of the battery case 40. The battery case 40 includes a front surface 40a, a rear surface 40b, both side surfaces 40c and 40d, and a bottom surface 40e, the front surface 40 and the rear surface 40b being located to face a front side and a rear side of the car body, respectively, with the battery case 40 fixed to the frame body 30.

The undercover 20 is provided under the car body 11, i.e., under the battery unit 14. In an example of the undercover 20, it is divided into an anterior half 20a and a posterior half 20b which are located on the front side and the rear side of the car body 11, respectively. The anterior half 20a and the posterior half 20b are connected with each other to form the undercover 20. The total length of the undercover 20 is greater than that of the battery unit 14. That is, the undercover 20 has a length sufficient to cover the battery case 40 from the front surface 40a to the rear surface 40b. Also, the undercover 20 has a width which is greater than that of the battery case 40.

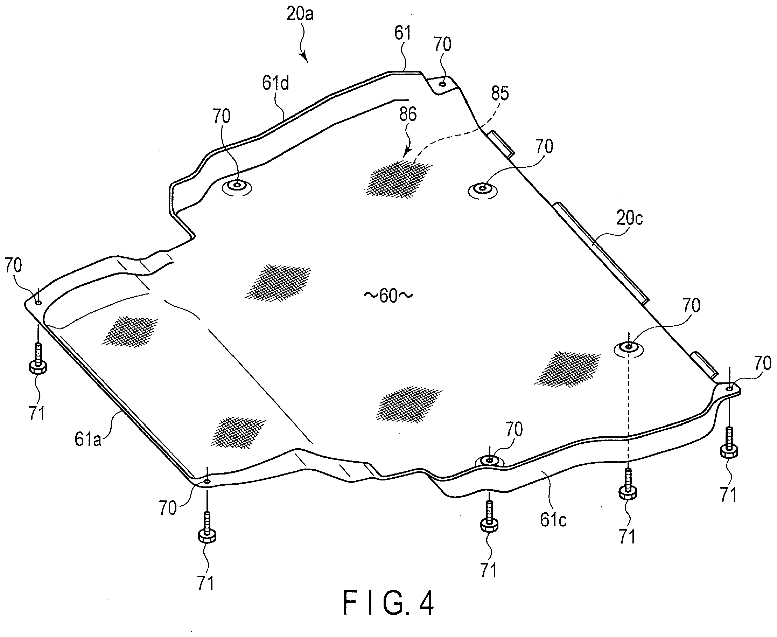

FIG. 4 shows an example of the anterior half 20a of the undercover 20. At a rear end of the anterior half 20a of the undercover 20, a connection portion 20c is provided for connection with the posterior half 20b. It should be noted that an undercover in which an anterior half 20a and a posterior half 20b are formed as a single body may be applied.

The undercover 20 includes a plate portion 60 which faces the bottom surface 40e of the battery case 40, and a convex edge 61 formed at a peripheral edge of the plate portion 60. The plate portion 60 and the convex edge 61 are formed of resin such as polypropylene (PP) and integral with each other. The undercover 20 may be formed of fiber reinforced resin (FRP). The plate portion 60 has an area sufficient to cover the bottom surface 40e of the battery case 40 as viewed from a lower side of the car body 11. An upper surface of the plate portion 60 faces lower surfaces of the beam members 51, 52, 53 and 54.

The convex edge 61 projects upwards at the peripheral edge of the plate portion 60. To be more specific, the convex edge 61 of the undercover 20 includes a front edge portion 61a, a rear edge portion 61b, and both side edge portions 61c and 61d. The front edge portion 61a is located closer to the front side of the car body 11 than the front surface 40a of the battery case 40. The rear edge portion 61b is located closer to the rear side of the car body 11 than the rear surface 40b of the battery case 40. The side edge portions 61c and 61d are located closer to outer sides of the car body 11 than the both side surfaces 40c and 40d of the battery case 40.

In the undercover 20, a plurality of bolt insertion holes (partially shown in FIG. 4) are formed. The bolt insertion holes 70 extend through the plate portion 60 in a thickness direction (vertical direction) thereof. When bolts 71 are respectively inserted through the bolt insertion holes 70, and then screwed into nut portions provided at the frame body 30, the undercover 20 is fixed to the car body 11 from the lower side of the car body 11.

As shown in FIG. 2, the undercover 20 is located over an area between the pair of left and right side members 31 and 32. A front end of the undercover 20 is fixed by bolts 71 to the cross member 33 which is the front one of the cross members. A center portion of the undercover 20 is fixed to the beam members 51, 52, 53 and 54. A rear end of the undercover 20 is fixed to the cross member 37 which is the rear one of the cross members (as shown in FIG. 2), with brackets interposed between the rear end and the cross member 37.

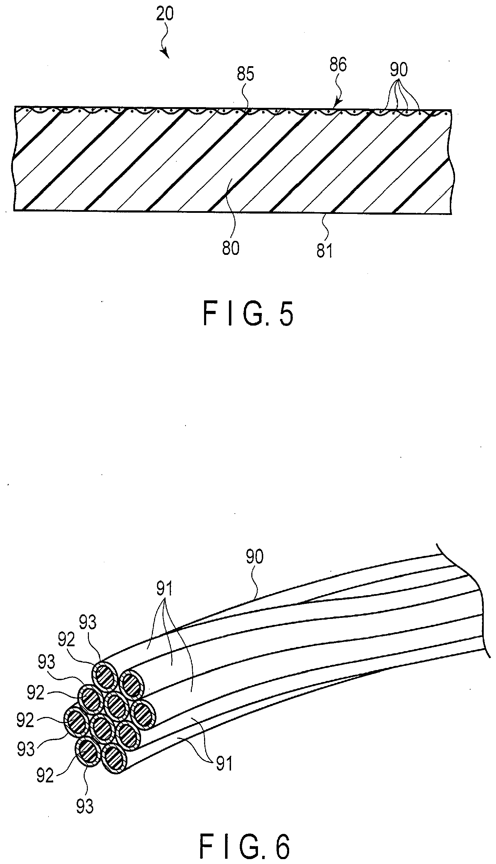

FIG. 5 is a cross-sectional view enlargedly and schematically showing part of the undercover 20. The undercover 20 comprises an undercover body 81 formed of resin and a cloth electromagnetic shield member 86. The undercover body 81 is made by molding resin 80 such as polypropylene in a predetermined shape. A conductive fabric 85 is provided on, e.g., an upper side of the undercover body 81. FIG. 4 shows part of the cloth electromagnetic shield member 86, which is formed of the conductive fabric 85. The undercover body 81 is located opposite to the bottom surface 40e of the battery unit 14.

The cloth electromagnetic shield member 86 prevents an electromagnetic wave generated from, e.g., the electric motor 12, from propagating from the lower side of the car body 11 to the electronic circuit portion 42 (shown in FIG. 3) in the battery case 40. That is, the undercover 20 provided with the cloth electromagnetic shield member 86 functions as a lower-side electromagnetic shield portion for preventing an electromagnetic wave from propagating from the lower side of the battery unit 14.

FIG. 6 shows part of a conductive thread 90 which forms the conductive fabric 85. The conductive thread 90 is made of a plurality of conductive fibers 91. The conductive fibers 91 are bicomponent fibers which are made of fiber bases 92 and conductive layers 93 covering the fiber bases 92. The fiber bases 92 are formed of, e.g., polyethylene terephthalate (PET). The conductive layers 93 are formed of metal such as copper. The conductive layers 93 are provided on outer peripheral surfaces of the fiber bases 92 by coating means such as electroless plating. In such a manner, the cloth electromagnetic shield member 86 in the embodiment is formed of the conductive fabric 85 into which the conducive fibers 91 are weaved. Furthermore, in the embodiment, as a rustproofing measure for the conductive fibers 91, protection layers are provided on outer portions of the conductive layers 93. The protection layers are formed of rustproof metal such as nickel.

Fineness of the conductive fibers 91 is not limited to a specific one. It is preferable that the conductive fibers 91 be sufficiently flexible such that they can follow an inner surface of a die when the undercover 20 is molded by the die. Thus, conductive fibers 91 having fineness of, e.g., 200 denier (approximately 22 tex) or less are adopted. In general, it is appropriate that the conductive fibers 91 have a volume resistivity of 10⁷Ω·cm or less, and it is preferable that they have a volume resistivity of 10²Ω·cm or less.

The undercover 20 is formed by a molding method using a die, such as hot pressing or a stamping molding. The conductive fabric 85 has flexibility and is soft. Thus, the conductive fabric 85 can be stuck along an inner surface of the die by vacuum suction means for generating a negative pressure. That is, the conductive fabric 85 is provided on the plate portion 60 of the undercover body 81, and preferably also on the convex edge 61, which is located in a periphery of the plate portion 60. That is, edge portions of the conductive fabric 85 are provided at the front edge portion 61a, rear edge portion 61b and both side edge portions 61c and 61d of the plate portion 60. In such a manner, the conductive fabric 85 may be provided over an area surrounded by the convex edge 61.

The conductive fabric 85 in the embodiment is provided over the convex edge 61 and the plate portion 60 of the undercover body 81. Thus, in the embodiment, the undercover 20 including the conductive fabric 85 has a higher electromagnetic shield effect in the longitudinal direction and transverse direction of the battery unit 14, compared with a conventional undercover in which no electromagnetic shield member is provided for a convex edge 61.

Between the resin 80 and the conductive fabric 85 of the undercover body 81, a boundary surface is present where the conductive fabric 85 and the resin 80 contact each other. At the boundary surface, when the resin 80 is melted at the time of molding the undercover 20, the resin 80 and the conductive fabric 85 are fixed to each other due to an adhesive property of the melted resin 80. Furthermore, the resin 80 enters the conductive thread 90 of the conductive fabric 85, and cures, thereby obtaining an anchor effect. This anchor effect can enhance a strength of fixing of the conductive fabric 85 to the undercover 81.

In such a manner, by the conductive fabric 85 in which the resin 80 of the undercover body 81 is melted, the resin 80 of the undercover body 81 is strengthened like fiber reinforced resin (FRP). It is therefore possible to prevent amplification of damage of the undercover 20 such as a fracture which would be caused when the vehicle hits on an obstruction or a stone leaping for driving. Thus, the strength of the undercover 20 is enhanced.

The undercover 20 according to the embodiment is fixed to the metallic frame body 30 by bolts 71. These bolts 71 penetrate the undercover body 81 and the conductive fabric 85 in a thickness direction (vertical direction). That is, the undercover 20 is fixed to the frame body 30 of the car body 11 by bolts 71 inserted from the lower side of the car body 11. To be more specific, in this case, a metallic bolt or bolts 71 inserted into the bolt insertion holes 70 of the undercover 20 penetrate the conductive fabric 85. As a result, the bolts 71 are fixed to the frame body 30, while at least one of the bolts 71 is in contact with the conductive fabric 85.

That is, while at least one bolt 71 is in contact with the conductive fabric 85, the bolts 71 fix the undercover 20 to metallic frame members (such as the side members 31 and 32, the cross members, etc.). Thus, the cloth electromagnetic shield member 86 formed of the conductive fabric 85 is grounded through the car body 11, which is metallic. Therefore, the electromagnetic shield effect by the conductive fabric 85 can be improved.

The undercover 20 also has a function of smoothening an airflow which is generated on a lower-surface side of the car body 11 during driving, and can thus reduce an air resistance during driving. The undercover 20 also functions as a lower-side electromagnetic shield portion for shutting out an electromagnetic wave from the lower side of the battery unit 14. In addition, under the battery unit 14, the metallic beam members 51, 52, 53 and 54 are arranged which function as lower-side shield portions. Since the undercover 20 comprises the beam members 51, 52, 53 and 54 and the cloth electromagnetic shield member 86, it can obtain a greater electromagnetic shield effect.

In a given vehicle, an electronic component which generates an electromagnetic wave is provided between the floor panel 50 and the undercover 20. In this case, an electromagnetic wave generated by the electronic component can be prevented from affecting electronic devices located above the floor panel 50, such as a radio, an electronic clock and a navigation system. To be more specific, an electromagnetic wave generated by the electronic component can be shut out by the floor panel 50 and the cloth electromagnetic shield member 86 provided at the undercover 20.

It should be noted that the cloth electromagnetic shield member 86 of the undercover 20 may be provided only at part of the undercover 20 in accordance with an intensity of an electromagnetic wave which propagates from the lower side of the car body 11 to reach the battery unit 14, and the range of propagation of the electromagnetic wave.

With electromagnetic shield means including the undercover 20 as explained above, it is possible to prevent an electromagnetic wave generated from an area located outside the battery case 40 from affecting the electronic circuit portion 42 in the battery case 40. It is also possible to prevent an electromagnetic wave generated in the battery case 40 from propagating to the outside of the undercover 20 therethrough. Thus, it is not necessary to provide an electromagnetic shield member such as a wire net, for the battery case 40, which would cause electrical shortings. Thus, it is safe.

As explained above, according to the embodiment, in the entire undercover 20, the area of which is greater than that of the battery unit 14, an electromagnetic shield member is provided which is formed of a conductive fabric. Thus, even if the shape and location of the battery unit 14 are changed, the undercover 20 to be used can be unchanged. Also, even an electronic component provided outside the battery unit 14 can be shielded by the undercover 20 from an electromagnetic wave.

In such a manner, in the undercover 20, the undercover body 81 and the conductive fabric 85 are united with each other. Such an undercover 20 is provided under the car body 11. By virtue of this structure, the conductive fabric 85 united with the resin 80 can restrict to some extent, shaking and vibration of the undercover 20 which are caused by wind blowing during driving. The conductive fabric 85 can also restrict cracking of the undercover 20 to some extent.

It should be noted that a wire net could be considered to be provided on an undercover as an electromagnetic shield member; however, it causes an inner surface of a die to be damaged at the time of molding the undercover. Furthermore, it was impossible to mold the undercover body and resin into a single body due to stiffness of a wire net and instability of the shape of the wire net which would be caused by springback. In addition, if a wire net is provided on the undercover, clips and screw members need to be provided to fix the wire net. Thus, holes for insertion of the clips need to be formed in part of the wire net, and there is a possibility that an electromagnetic shield effect cannot be obtained at the locations of the formed holes.

Therefore, in the embodiment, as described above, the conductive fabric 85 and the resin 80 are molded into a single body at the time of molding the undercover 20 with a die due to heat. Thus, after molding, it is not necessary to carry out a step of fixing the conductive fabric 85 to the undercover body 81 with clips and screw members. In addition, the undercover 20 molded such that the resin 80 and the conductive fabric 85 are molded into the single body needs no holes for insertion of clips for fixing the electromagnetic shield member. It is therefore possible to reduce the number of portions having no electromagnetic shield effect to a minimum.

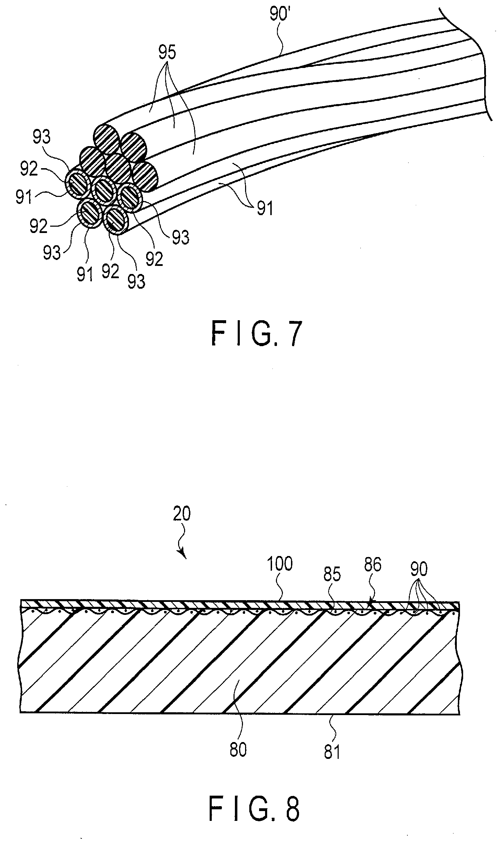

FIG. 7 shows a conductive thread 90' forming a conductive fabric in an undercover according to a second embodiment. The undercover according to the second embodiment is the same as the undercover 20 according to the first embodiment, except for the structure of the conductive thread 90'. The conductive thread 90' is formed of conductive fibers 91 and nonconductive fibers 95. The conductive fibers 91, as well as those of the first embodiment, include fiber bases 92 and conductive layers 93 covering the fiber bases 92. The fiber bases 92 are formed of resin such as PET. The conductive layers 93 are formed of metal or the like.

The nonconductive fibers 95 are formed of resin only, such as PET, and do not have conductivity. However, the nonconductive fibers 95 have compatibility with the resin 80 of the undercover body 81. The compatibility is a property in which two or more different kinds of materials have an affinity for each other, and can be mixed into a single body, while being stacked and melted together, as for example, polyethylene terephthalate (PET) and polypropylene (PP). The conductive fibers 91 have a volume resistivity of, e.g., 10⁷Ω·cm or less. The nonconductive fibers 95 have a volume resistivity of, e.g., 10¹⁴ to 10¹⁶Ω·cm.

In the second embodiment, the nonconductive fibers 95 and resin 80 of the undercover body 81 are formed of respective resin having compatibility with each other. Thus, a conductive fabric 85 into which the conductive fibers 91 and the nonconductive fibers 95 are weaved can be further strongly fixed to the undercover body 81 due to the compatibility between the nonconductive fibers 95 and the resin 80 of the undercover body 81.

It should be noted that as another example of the conductive fabric 85 forming a cloth electromagnetic shield member 86, a fabric or a nonwoven fabric may be applied which is formed of a complex material which is a combination of metal fibers and fibers obtained by subjecting fibers, copper, nickel, etc. to electroless plating. That is, any cloth may be applied as long as it has conductivity and is flexible such that it can follow an inner surface of a die. Such a conductive fabric is pressurized along with the resin 80 of the undercover body 81 in a thickness direction by a stamping molding or hot pressing using a die, while they are being heated. Thereby, an undercover 20 can be obtained in which the resin 80 and the conductive fabric 85 are molded into a single body.

FIG. 8 shows part of an undercover 20 according to the invention. In a conductive fabric 85 forming the undercover 20, a surface located opposite to an undercover body 81 (i.e., an upper surface of the conductive fabric 85) is covered by a laminate resin layer 100. The laminate resin layer 100 and resin 80 of the undercover body 81 are formed of respective resin having compatibility for each other. At the time of performing heat molding using a die, the resin 80 of the undercover body 81 seeps from the conductive fabric 85 to the laminate resin layer 100 to unite with the laminate resin layer 100. As a result, the undercover body 81 and the conductive fabric 85 are further strongly fixed to each other. Furthermore, an upper surface (outer surface side) of the conductive fabric 85 is covered by the laminate resin layer 100. In this case, the undercover body 81 is made waterproof. Thus, even if conductive layers 93 of conductive fibers 91 forming the conductive fabric 85 are formed of copper only, and are not covered by anticorrosive metal, the conductive fibers 91 can be prevented from rusting.

### Industrial Applicability

In the above explanations of the above embodiments, although a vehicle (electric car) to be driven by an electric motor only is referred to, the present invention can also be applied to a hybrid vehicle provided with an electric motor and an engine (internal combustion engine). Furthermore, needless to say, when the present invention is put to practical use, the structures and locations of structural elements of the invention, as well as the concrete shapes of the car body and the battery unit, can be modified as appropriate.

## Claims

1. An undercover (20) to be provided under a battery unit (14) mounted on a lower portion of a vehicle, comprising
an undercover body (81) formed of resin (80) and locatable opposite to a bottom surface (40e) of the battery unit (14), and
a conductive fabric (85) into which conductive fibers (91) are woven stacked on the undercover body (81), **characterized by** further comprising
a laminate resin layer (100) stacked on the undercover body (81) in such a state that a surface of the conductive fabric (85) located opposite to the undercover body (81) is covered by the laminate resin layer (100),
wherein the conductive fibers (91) include fiber bases (92) formed of resin and conductive layers (93) covering the fiber bases (92),
the resin (80) of the undercover body (81) is melted and the undercover body (81) is stuck to the conductive fabric (85), and
the resin (80) of the undercover body (81) seeps from the conductive fabric (85) to the laminate resin layer (100) to unite with the laminate resin layer (100).

2. The undercover of claim 1, **characterized in that** an upwardly projecting edge (61) is provided at a peripheral edge of the undercover body (81), and the conductive fabric (85) is provided over an area surrounded by the upwardly projecting convex edge (61).

3. The undercover of claim 1 or 2, **characterized by** further comprising a metallic bolt (71) being provided to penetrate the undercover body (81) and the conductive fabric (85) in a thickness direction, the bolt (71) being fixed to a metallic frame member of a car body (11), while being in contact with the conductive fabric (85).

## Patentansprüche

1. Unterhaube (20), die unter einer Batterieeinheit (14) vorzusehen ist, die an einem unteren Abschnitt eines Fahrzeugs montiert ist, mit
einem Unterhaubenkörper (81), der aus Harz (80) gebildet und gegenüber einer Bodenfläche (40e) der Batterieeinheit (14) anordbar ist, und
einem leitfähigen Gewebe (85), in das leitfähige Fasern (91) eingewebt sind und das auf dem Unterhaubenkörper (81) gestapelt ist, **dadurch gekennzeichnet, dass** sie ferner aufweist:
eine Laminatharzschicht (100), die auf dem Unterhaubenkörper (81) in einem solchen Zustand gestapelt ist, dass eine Oberfläche des leitfähigen Gewebes (85), die gegenüber dem Unterhaubenkörper (81) liegt, von der Laminatharzschicht (100) bedeckt ist,
wobei die leitfähigen Fasern (91) aus Harz gebildete Faserträger (92) und die Faserträger (92) bedeckende leitfähige Schichten (93) aufweisen,
das Harz (80) des Unterhaubenkörpers (81) erschmolzen und der Unterhaubenkörper (81) an das leitfähige Gewebe (85) geklebt ist und
das Harz (80) des Unterhaubenkörpers (81) vom leitfähigen Gewebe (85) zur Laminatharzschicht (100) austritt, um sich mit der Laminatharzschicht (100) zu vereinen.

2. Unterhaube nach Anspruch 1, **dadurch gekennzeichnet, dass** eine nach oben vorstehende Kante (61) an einer Umfangskante des Unterhaubenkörpers (81) vorgesehen ist und das leitfähige Gewebe (85) über einer Fläche vorgesehen ist, die von der nach oben vorstehenden konvexen Kante (61) umgeben ist.

3. Unterhaube nach Anspruch 1 oder 2, **dadurch gekennzeichnet, dass** sie ferner einen metallischen Bolzen (71) aufweist, der so vorgesehen ist, dass er den Unterhaubenkörper (81) und das leitfähige Gewebe (85) in Dickenrichtung durchdringt, wobei der Bolzen (71) an einem metallischen Rahmenteil einer Fahrzeugkarosserie (11) befestigt ist, während er in Kontakt mit dem leitfähigen Gewebe (85) steht.

## Revendications

1. Couverture inférieure (20) destinée à être prévue sous une unité de batterie (14) montée sur une partie inférieure d'un véhicule, comprenant :
un corps de couverture inférieure (81) formé de résine (80) et pouvant être positionné à l'opposé d'une surface basse (40e) de l'unité de batterie (14), et
un tissu conducteur (85) dans lequel des fibres conductrices (91) sont tissées empilé sur le corps de couverture inférieure (81), **caractérisée en ce qu'**elle comprend en outre :
une couche de résine stratifiée (100) empilée sur le corps de couverture inférieure (81) dans un état dans lequel une surface du tissu conducteur (85) positionnée à l'opposé du corps de couverture inférieure (81), est recouverte par la couche de résine stratifiée (100),
dans laquelle les fibres conductrices (91) comprennent des bases de fibre (92) formées de résine et des couches conductrices (93) recouvrant les bases de fibre (92),
la résine (80) du corps de couverture inférieure (81) est fondue et le corps de couverture inférieure (81) est collé au tissu conducteur (85), et
la résine (80) du corps de couverture inférieure (81) s'infiltre du tissu conducteur (85) jusqu'à la couche de résine stratifiée (100) pour s'unir avec la couche de résine stratifiée (100).

2. Couverture inférieure selon la revendication 1, **caractérisée en ce qu'**un bord en saillie vers le haut (61) est prévu au niveau d'un bord périphérique du corps de couverture inférieure (81), et le tissu conducteur (85) est prévu sur une zone entourée par la bord convexe en saillie vers le haut (61).

3. Couverture inférieure selon la revendication 1 ou 2, **caractérisée en ce qu'**elle comprend en outre un boulon métallique (71) qui est prévu pour pénétrer dans le corps de couverture inférieure (81) et le tissu conducteur (85) dans une direction d'épaisseur, le boulon (71) étant fixé sur un élément de bâti métallique d'une carrosserie de véhicule (11), tout en étant en contact avec le tissu conducteur (85).
